# EUROPÄISCHE PATENTANMELDUNG

(11) **EP 2 455 901 A1**
(43) Veröffentlichungstag der Anmeldung: **23.05.2012**
(21) Anmeldenummer: 11009288.9
(22) Anmeldetag: 23.11.2011
(51) Int. Cl.: G06Q 10/10

(54) **Verfahren und System zur Bereitstellung und Aktualisierung eines Dokuments oder Bauteils**

(30) Priorität: 23.11.2010 AT 19362010
(71) Anmelder: Frick, Helmut, 6682 Vils (AT)
(72) Erfinder: Frick, Helmut, 6682 Vils (AT)
(74) Vertreter: Torggler, Paul Norbert

(57) **Zusammenfassung**

Verfahren und System zur Bereitstellung und Aktualisierung eines Dokuments oder Bauteils (D₁, D₂, D₃) mit wenigstens einer, insbesondere mehreren, sich auf einen zu regelnden Gegenstand beziehenden Regelvorschrift (a, b, c, d) bei dem das Dokument (D₁, D₂, D₃) von einer Zentralstelle (1) publiziert, einem oder mehreren Anwendern (2) bereitgestellt und in weiterer Folge anwenderseitig insbesondere in einer Datenbank (3) verwaltet wird, wobei für eine Aktualisierung des Dokuments (D₁, D₂, D₃) im Wesentlichen ausschließlich die zu aktualisierende Regelvorschrift (b₁, b₂, c₁) von der Zentralstelle (1) publiziert und dem Anwender (2) bereitgestellt wird.

## Beschreibung

Die Erfindung betrifft ein Verfahren zur Bereitstellung und Aktualisierung eines Dokuments mit wenigstens einer, insbesondere mehreren, sich auf einen zu regelnden Gegenstand beziehenden Regelvorschrift(en), bei dem das Dokument von einer Zentralstelle publiziert, einem oder mehreren Anwendern bereitgestellt und in weiterer Folge vorzugsweise anwenderseitig insbesondere in einer Datenbank verwaltet wird.

Ein derartiges Dokument kann beispielsweise Produkt eines Normungsverfahrens sein, und enthält In diesem Fall die vereinbarten und festgeschriebenen Regelungen des Verfahrens, im Folgenden unter dem Oberbegriff Regelvorschriften benannt, und wird allgemein als Norm" bezeichnet. Eine solche "Norm" ist nach ÖVE/ÖNORM EN 45020 ein Dokument, das mit Konsens erstellt und von einer anerkannten Institution angenommen wurde und das für die allgemeine und wiederkehrende Anwendung Regeln, Leitlinien oder Merkmale für Tätigkeiten oder deren Ergebnisse festlegt.

Normung kommt vor allem zur Anwendung, wenn gleichartige oder ähnliche Gegenstände in vielen unterschiedlichen Zusammenhängen an verschiedenen Orten von verschiedenen Personenkreisen gebraucht werden und hat zum Ziel, innerhalb des Interessentenkreises national wie international durch Vereinheitlichungen und Standardisierungen technische Anwendungshemmnisse zu vermeiden und den Austausch von Waren und Dienstleistungen zu fördern. Weitere Vorteile von Normung sind Kompatibilität, Gebrauchstauglichkeit und Sicherheit bei der Verwendung von Produkten und Dienstleistungen.

Allgemein existiert allerdings eine Vielzahl an Normen und technischen Regelwerken, wodurch sich für den Anwender des Öfteren darin Schwierigkeiten ergeben können, die entsprechenden Normen zu finden beziehungsweise die richtigen Normen anzuwenden, laufende Änderungen zu überwachen und in weiterer Folge zu ermitteln, welche Auswirkungen Normenänderungen für das Unternehmen mit sich bringen.

Das Dokument enorm" wird in der Regel nach Abschluss des Normungsverfahrens als Printmedium publiziert und kann dabei einen sehr unterschiedlichen Umfang haben. Eingangs werden meist eine Inhaltsübersicht und BegriffsdefinMonen gegeben, darauf folgt der Hauptteil mit den eigentlichen Regelvorschrtften, die unter anderem Festlegungen von Eigenschaften von Geräten, Bauteilen, Systemelementen, Schnittstellen, Prozessen, Mess- und anderen Verfahren umfassen. Zum Schluss werden oft noch Verweise auf weitere über- oder untergeordnete und zu beachtende Normen zum gleichen Thema gegeben.

Da Normen in einem mehrstufigen Verfahren in demokratischer Weise unter Einbeziehung aller betroffenen Kreise im Konsensprinzip erarbeitet werden, kann sich nicht nur die Ersterstellung einer Norm über einen sehr langen Zeitraum ziehen, auch im Falle notwendiger Änderungen kann es oft Monate oder Jahre dauern, bis ein aktualisiertes Dokument mit den korrigierten Inhalten die Anwender erreicht. Während dieser Zeit wird folglich immer noch mit der alten, fehlerhaften Norm gearbeitet, was natürlich insbesondere in Bezug auf die Produktsicherheit entsprechende Risiken darstellt.

Ausgehend von diesem Stand der Technik hat es sich die Erfindung zur Aufgabe gemacht ein verbessertes Verfahren zur Bereitstellung und Aktualisierung eines Dokuments anzugeben mit dem unter Vermeidung der vorbeschriebenen Nachteile insbesondere eine raschere und effizientere Verteilungsmethode erreicht werden kann.

Zur Lösung dieser Aufgabe sieht die Erfindung vor, dass das Dokument (D₁, D₂, D₃) anwenderseitig in einer lokalen Datenbank (3) verwaltet wird und Beziehungen zwischen dem Dokument (D₁, D₂, D₃) und/oder einzelnen Regelvorschriften (a, b, b₁, b₂, c, C₁) des Dokuments (D₁, D₂, D₃) mit wenigstens einem, vorzugsweise mehreren, auf den zu regelnden Gegenstand bezogenen anwenderspezifischen Sekundärdatensatz (S₁, S₂, S₃, S₄) definiert werden.

Gemäß einem bevorzugten Ausführungsbeispiel der Erfindung stellt das Dokument eine Norm dar und der Gegenstand, auf den sich die wenigstens eine Regelvorschrift bezieht, ist ein Produkt, ein Prozess, ein Verfahren oder ein System.

Beim erfindungsgemäßen Verfahren wird in einer anwenderseitigen Sekundärdatenbank ein Set von anwenderspezifischen Sekundärdatensätzen eingepflegt und verwaltet. Diese anwenderspezifischen Sekundärdatensätze geben unter anderem an, welche einzelnen Regelvorschriften eines Dokumentes, beispielsweise einer Norm für einen zu regelnden Gegenstand, beispielsweise für ein bestimmtes Projekt oder eine bestimmte Maschine relevant sind. Durch die Herstellung der Beziehungen zwischen den einzelnen Regelvorschriften des Dokumentes und diesen anwenderspezifischen Sekundärdatensätzen, ist es bei einer Aktualisierung oder Änderung der einzelnen Regelvorschriften einfach möglich, die Konsequenzen aufgrund der anwenderspezifischen Sekundärdatensätze zu ermitteln. Bei Änderung einer Norm sind beispielsweise nur jene Sekundärdatensätze des Anwenders relevant, in denen die einzelnen Vorschriften der Norm, die wirklich geändert worden sind vorkommen. Die übrigen Sekundärdatensätze können völlig unberührt bleiben.

Besonders bevorzugt können die Sekundärdatensätze abgesehen von den Beziehungen zu den einzelnen Regelvorschhften eines Dokumentes auch noch von diesen einzelnen Regelvorsrhriften abhängige Querverweise aufweisen. Diese Querverweise geben an, welche Konsequenzen eine Regeländerung beim Anwender hat, insbesondere können diese Querverweise automatisiert bei Regeländerungen Informationen an bestimmte Adressaten ausgeben, optische und/oder akustische Warnmeldungen abgeben und/oder Änderungen von Maschinensteuerungen direkt vornehmen.

Ein großer Vorteil des erfindungsgemäßen Verfahrens und des erfindungsgemäßen Systems liegt darin, dass bei Änderung eines Dokumentes, insbesondere einer Norm, nicht das gesamte Dokument abgespeichert und verwaltet werden muss. Vielmehr reicht es aus, wenn nur jene einzelnen Regelvorschriften des Dokuments, die tatsächlich in der Sekundärdatenbank benötigt werden, verwaltet und aktualisiert werden. Ein weiterer Vorteil besteht darin, dass das erfindungsgemäße Verfahren und System automatisiert arbeiten kann, sodass bei Änderung einzelner, für den Anwender relevanten Regelvorschriften automatisiert Handlungen vorgenommen werden können, sodass - beispielsweise bei einer Norm - jedenfalls sichergestellt ist, dass nicht nach einer alten Regelvorschrift gearbeitet wird.

Wie oben bereits angedeutet wurde, kann bei der Erfindung bevorzugt vorgesehen sein, dass für eine Aktualisierung des Dokuments (D₁, D₂, D₃) im Wesentlichen ausschließlich die zu aktualisierende Regelvorschrift (b₁, b₂, c₁) von der Zentralstelle (1) publiziert und dem Anwender (2) bereitgestellt wird.

Anders ausgedrückt, wird also bei einer Änderung einer Regelvorschrift nicht mehr wie bisher üblich die Endbearbeitung des kompletten Dokuments abgewartet bevor das aktualisierte Dokument publiziert wird, vielmehr wird erfindungsgemäß nach Erreichen eines Konsens für eine zu aktualisierende Regelvorschrift diese umgehend publiziert und den Anwendern bereitgestellt.

Es versteht sich von selbst, dass durch diese Vorgehensweise die Zeitspanne zwischen der Beschlussfassung über die durchzuführende Aktualisierung und der Veröffentlichung der aktualisierten Fassung gegenüber der herkömmlichen Methode um ein Vielfaches reduziert werden kann, was sich selbstredend positiv auf die Kompatibilität, Gebrauchstauglichkeit und vor allem auf die Sicherheit bei der Verwendung von Produkten und Dienstleistungen auswirkt.

Wenn gemäß einer weiteren Ausführungsform der Erfindung die Publikation der zu aktualisierenden Regelvorschrfft(en) auf einem Datenbankserver, mit dem der Anwender vorzugsweise online verbunden bzw. verbindbar ist, erfolgt, lässt sich die Zeitspanne zwischen Beschluss und Bereitstellung für den Anwender noch einmal verkürzen, da ja sämtliche Schritte der Drucklegung und des Versands der aktualisierten Regelvorschrift wegfallen.

Um sicher zu stellen, dass der Anwender Kenntnis über das Vorliegen einer aktualisierten Regelvorschrift hat, kann weiters vorgesehen sein, dass die Zentralstelle den Anwender vor, bei oder nach erfolgter Publikation der aktualisierten Regelvorschrift(en) über deren Bereitstellung informiert. Dabei hat es sich, wenn die Publikation auf einem Datenbankserver erfolgt, als besonders vorteilhaft herausgestellt, wenn die Aktualisierung mittels autorisierter, vorzugsweise verschlüsselter, Datenübertragung erfolgt, wodurch einerseits unautorisierte Manipulation und Missbrauch unterbunden werden können und andererseits sichergestellt wird, dass die Anwender tatsächlich mit den jeweils für sie relevanten Aktualisierungen versorgt werden.

In der bisher gängigen Unternehmenspraxis beschränkten sich Informationen über Änderungen von Regelvorschriften zunächst auf bestimmte Personen, z. B. die Mitarbeiter in einer Normenabteilung. Von diesen wurde dann die Informationen, dass sich eine Regelvorschrift geändert hat, an den jeweils betroffenen Personenkreis, beispielsweise per E-Mail Benachrichtigung, weitergeleitet.

Auf diese Weise kann zwar - vorausgesetzt, dass der betroffene Personenkreis definiert und gepflegt wird - sichergestellt werden, dass die Information über die Aktualisierung der Regelvorschhft den betroffenen Personenkreis erreicht, allerdings hat die Praxis gezeigt, dass eben diese Definition des betroffenen Personenkreises meist nur unzulänglich gegeben ist. Darüber hinaus fehlt den Verteilungssystemen nach dem Stand der Technik meist die wichtigste, nämlich die gefilterte Information, welche Regelvorschrift sich in einer Norm konkret und in welcher Weise geändert hat und ob diese Änderungen beispielsweise sicherheitstechnisch bzw. haftungsrechtlich relevant sind. Deshalb musste bisher in aufwändigen Zusatzverfahren festgestellt werden, was die Regelvorschriftenänderungen für den jeweiligen Personenkreis bedeuten, z.B welche Projekte davon betroffen sind und wie darauf reagiert werden muss.

Die Verteilung des Wissens um aktualisierte Regelvorschriften beim Anwender erfolgt durch die Erfindung einfach und zuverlässig. Die anwenderspezifischen Sekundärdatensätze können nach der Erfindung zuständigkeitsbezogene Daten, insbesondere Informationen über Aufgaben und die jeweilig verantwortlichen Personen, umfassen. Ein weiteres Ausführungsbeispiel der Erfindung sieht vor, dass die anwenderspezifischen Sekundärdatensätze bauteilbezogene Daten umfassen.

Dadurch wird erreicht, dass sich die Ermittlung, welche Personen von Regelvorschriftenänderungen betroffen sind, nicht nur an den Eigendefinitionen von Personen orientiert. ErFndungsgemäß können nun anhand vorliegender Sekundärdatensätze und deren definierten Beziehungen zu einem Dokument und/oder einzelnen Regelvorschriften eines Dokumentes vielfältige Parameter bei der Ermittlung der Auswirkungen, die eine Änderung einer Regelvorschrift mit sich bringt, berücksichtigt werden.

So lässt sich beispielsweise mittels Querverweisen und über an sich bekannte Datenbankfunktionen eruieren, welche Projekte in welcher Weise von Normenänderungen betroffen sind, welche sicherheitstechnischen Lösungen in welchen Projekten von Regelvorschriftenänderungen betroffen sind und daher hinterfragt werden müssen oder welche Personen für die Validierung von Maßnahmen auf Basis einer bestimmten Norm zuständig sind und daher informiert werden müssen. Weiters wäre es denkbar festzustellen, welche Maßnahmen erneut validiert werden müssen, weil beispielsweise im Zuge eines Projektverlaufs bereits abgeschlossene Lösungen von Regelvorschriftenänderungen betroffen sind oder ob gar zur Gänze abgeschlossene Projekte von untauglichen oder fehlerhaften Normen, die zu Produkthaftungsrisiken führen können, betroffen sind. Auf diese Weise stellt das erfindungsgemäße Verfahren also auch ein probates Hilfsmittel bei der Erfüllung der Produktbeobachtungspflicht dar.

Ein bevorzugtes Merkmal der Erfindung besteht also darin, Änderungen von in Dokumenten implementierten Regelvorschriften von einer Zentralstelle vereinzelt, das bedeutet in diesem Zusammenhang unabhängig vom gesamten Dokument, zu publizieren und den Anwendern bereitzustellen. Ein weiteres bevorzugtes Merkmal sieht vor, diese Änderung den jeweiligen Anwendern möglichst bedarfsgerecht und/oder möglichst einfach vergleichbar bereitzustellen.

Dementsprechend sieht eine weitere Ausführungsform der Erfindung vor, dass die Zentralstelle die Anwender über die Bereitstellung aktualisierter Regelvorschriften in Abhängigkeit bestehender Beziehungen zwischen dem Dokument und/oder einzelnen Regelvorschriften des Dokuments mit wenigstens einem anwenderspezifischen Sekundärdatensatz informiert. Zur Umsetzung dieser Maßnahme ist es notwendig, dass die Zentralstelle Informationen über die beim jeweiligen Anwender bestehenden Beziehungen zwischen den Regelvorschriften und Sekundärdatensätzen besitzt. Der Austausch solcher Informationen kann beispielsweise mittels vorzugsweise verschlüsselter Datenübertragung erfolgen.

Für eine einfache Zuordnung und zur Erzielung einer geordneten Struktur kann erfindungsgemäß weiters vorgesehen sein, dass das Dokument in Abschnitte gegliedert wird und jedem Abschnitt zumindest eine, vorzugsweise mehrere, Regelvorschrift zugeordnet wird bzw. zuordenbar ist. So wird erreicht, dass zusammenhängende Regelvorschriften beziehungsweise Regelvorschriften, die sich auf denselben Gegenstand beziehen leichter auffindbar sind.

Als besonders günstig hat es sich dabei herausgestellt, wenn die zu aktualisierenden Regelvorschriften abschnittsselektiert publiziert und dem Anwender bereitgestellt werden, In diesem Fall kann erfindungsgemäß die Selektierung der zu aktualisierenden Abschnitte in Abhängigkeit bestehender Beziehungen zwischen dem Dokument und/oder einzelnen Regelvorschriften des Dokuments mit wenigstens einem auf den zu regelnden Gegenstand bezogenen anwenderspezifischen Sekundärdatensatz erfolgen.

Die Erfindung betrifft weiters ein System zur Durchführung eines vorbeschriebenen Verfahrens mit einer Einrichtung für einen Zugriff auf eine und einer Verwaltung von einer technischen Datenbank, insbesondere Dokumentendatenbank, vorzugsweise Normendatenbank, die elektronisch gespeicherte Dokumente mit sich auf einen zu regelnden Gegenstand beziehende, vorzugsweise in Abschnitte gegliederte Regelvorschriften umfasst.

Derartige Systeme sind an sich bekannt, weisen aber wie bereits weiter oben ausgeführt den Nachteil auf, dass die Verteilung der aktualisierten Dokumente entweder in Papierform oder auf mobilen Datenträgern erfolgt und somit eine Weiterbearbeitung, beispielsweise das Einpflegen der erhaltenen aktualisierten Dokumente in eine Datenbank beim Anwender, zwingend erforderlich ist. Dass eine solche Weiterbearbeitung zeitaufwändig ist und zudem eine Fehlerquelle darstellt, versteht sich von selbst. Insbesondere die Sicherstellung, dass alle von der Regelvorschriftenänderung ausgelösten Folgewirkungen erkannt, die entsprechenden Maßnahmen veranlasst und die zuständigen Personenkreise verständigt werden kann mit den Systemen nach dem Stand der Technik nur in unzureichendem Ausmaß gewährleistet werden.

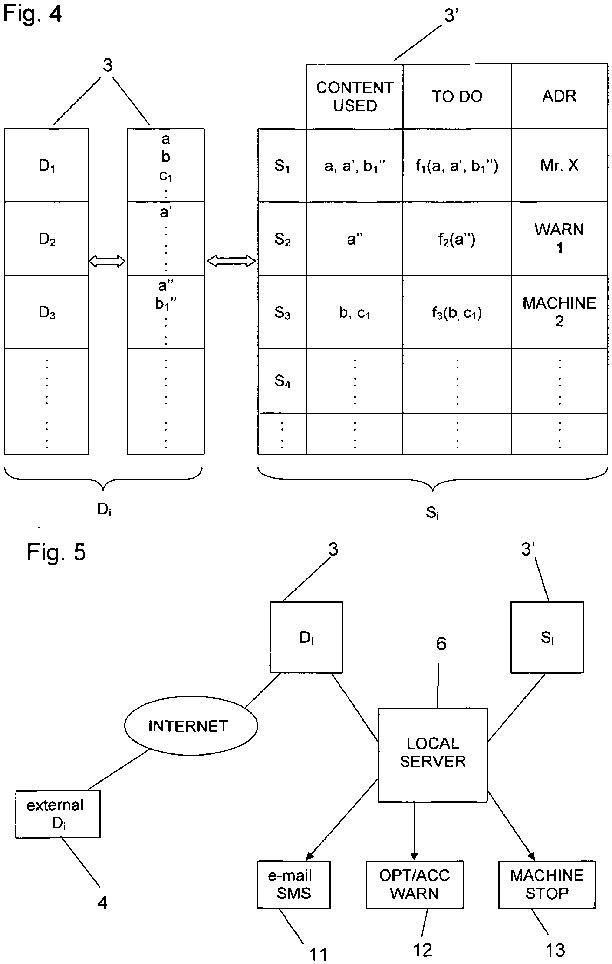

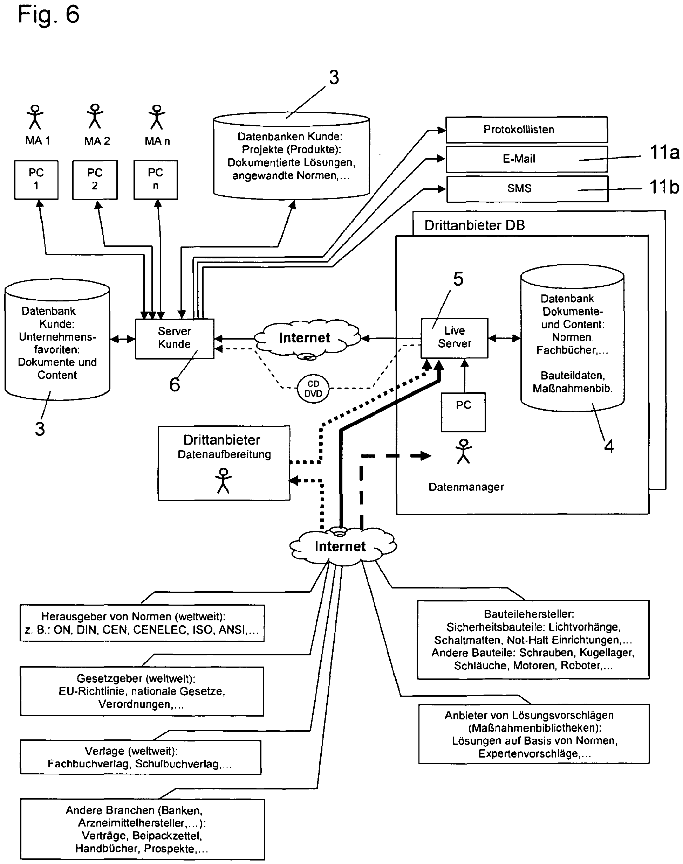

Diese Nachteile lassen sich mit einem System nach der Erfindung vermeiden, indem eine Sekundärdatenbank vorgesehen ist, die auf dem zu regelnden Gegenstand bezogene Sekundärdatensätze enthält, wobei diese anwenderspezifische Sekundärdatensätze (S₁, S₂, S₃, S₄) von den mit ihnen in Beziehung stehenden einzelnen Regelvorschriften (a, a', b, b₁", c₁) abhängige Querverweise (f₁. f₂, f₃) aufweisen, und der Datenbankserver und/oder ein damit in Verbindung stehender Rechner in Abhängigkeit von diesen Querverweisen (f₁, f₂, f₃) automatisch Informationen an bestimmte Adressaten ausgibt, optische und/oder akustische Wammeldungen abgibt und/oder Änderungen von Maschinen-steuerungen vornimmt (Fig. 5, Fig. 6).

Vorzugsweise ist vorgesehen, dass die Einrichtung einen Datenbankserver aufweist und die technische Datenbank strukturiert ist, um Beziehungen zwischen Regelvorschriften und auf den zu regelnden Gegenstand bezogenen Sekundärdatensätze zu umfassen, so dass ein Zugriff auf ein Dokument wenigstens einen Sekundärdatensatz zurückgibt, der in der technischen Datenbank mit auf Regelvorschriften bezogenen Querverweisen versehen ist.

Anders ausgedrückt ist beim erfindungsgemäßen System die automatisierte Weiterbearbeitung bereits implementiert, wodurch die Fehlerquote bei der Umsetzung der geänderten Regelvorschriften bei entsprechender Datenpflege beinahe gegen Null reduziert werden kann, was sich wiederum positiv auf den eigentlichen Nutzen des Dokuments, nämlich der Sicherstellung der Gebrauchstauglichkeft und Sicherheit bei der Verwendung von Produkten und Dienstleistungen, auswirkt.

Weiters soll ein Verfahren zur Überprüfung des Vorliegens einer aufrechten Konformitätsvermutung für einen genormten Gegenstand bezogen auf wenigstens eine Norm, insbesondere zum Zeitpunkt seiner Inverkehrbringung, angegeben werden.

Bei Produkten, die nach geeigneten harmonisierten Normen konstruiert wurden, geht man davon aus, dass die von diesen Normen abgedeckten grundlegenden (Sicherheits-) Anforderungen der anzuwendenden Richtlinie erfüllt sind. Die Produkte gelten als richtlinienkonform, man spricht von einer Konformitätsvermutung. Damit Hersteller und Marktaufsichtsbehörden davon ausgehen können, dass die Anwendung harmonisierter Normen eine gewisse Rechtssicherheit auslöst, müssen bestimmte Bedingungen erfüllt sein.

Stellt sich beispielsweise heraus, dass die Richtlinienanforderungen in einer Norm oder in einem Normenabschnitt nicht ausreichend konkretisiert wurden, kann die EU-Kommission die Fundstelle im Amtsblatt der EG vollständig zurückziehen oder mit Einschränkungen versehen. Im zweiten Falle gift die Konformitätsvermutung dann für bestimmte wesentliche Anforderungen der Richtlinie(n), die in der bestehenden Norm oder in bestehenden Normenabschnitten nicht (mehr) oder nicht (mehr) ausreichend behandelt werden, explizit nicht.

Wie auch die Herausgabe der aktualisierten Dokumente im Papierformat stellt das Amtsblatt der EU zwar ein taugliches Mittel dar, allerdings wiederum mit einer für den Anwender unzumutbar langen Zeitspanne zwischen Beschluss, Veröffentlichung und Klarheit der Bedeutung für Projekte, Systeme, Verfahren, Personen,.... Auch stellt das Auffinden der entsprechenden Fundstelle im entsprechenden Amtsblatt für die jeweils angewande Norm zur Erfüllung einer Richtlinie eine organisatorische Hürde dar.

Zur Lösung dieser Problematik verwendet das erfindungsgemäße Verfahren zur Überprüfung einer gültigen Konformitätsvermutung eine technische Datenbank, die harmonisierte Normen zumindest in der aktuell gültigen Fassung sowie sich auf den genormten Gegenstand beziehende Sekundärdatensätze elektronisch gespeichert umfasst und strukturiert ist, um Beziehungen zwischen den Regelvorschriften der Normen und den Sekundärdatensätzen zu umfassen, wobei die Überprüfung der Gültigkeit der Konformitätsvermutung auf Basis von Querverweisen, mit denen die Sekundärdatensätze in der technischen Datenbank versehen bzw. mit der(den) anzuwendenden Norm(en) oder Normenabschnitten verknüpft sind, erfolgt.

So kann die technische Datenbank zu einem bestimmten genormten Gegenstand die jeweils angewandten Normen bzw. Normenabschnitte in Form von Sekundärdatensätzen beinhalten. Diese wiederum können mit Querverweisen auf die jeweilige Fundstelle im entsprechenden, vorzugsweise online verfügbaren Amtsblatt versehen sein, sodass die Überprüfung auf eine gültige Konformitätsvermutung in einfachster Weise zu jeder Zeit mit den aktuell gültigen Publikationen erfolgen kann.

Selbstverständlich kann dieses neuerungsgemäße Verfahren, wie ein weiteres Ausführungsbeispiel der Erfindung vorsieht, in einem Verfahren zur Durchführung einer Konformitätsbewertung für einen genormten Gegenstand angewandt werden, wodurch neben der Rechtssicherheit auch noch eine enorme Zeitersparnis erreicht werden kann.

Weitere Vorteile und Einzelheiten werden anhand der nachfolgenden Figurenbeschreibung unter Bezugnahme auf die in der Zeichnung dargestellten Ausführungsbeispiele näher erläutert. Darin zeigen
- Fig. 1: schematisch das Prinzip des erfindungsgemäßen Verfahrens,
- Fig. 2: ein Beispiel einer strukturierten Ablage eines Dokuments in der Datenbank der Zentralstelle/des Anwenders und
- Fig. 3a bis 3c: Datenbankabfrageergebnisse zum Dokument aus Fig. 2.
- Fig.4: schematischer Aufbau einer anwenderseitigen bzw. kundenseltigen Datenbank 3, sowie einer Sekundärdatenbank 3'.
- Fig. 5: schematischer Aufbau eines Datenbanksystems gemäß einem Ausführungsbeispiel der Erfindung beim Kunden.
- Fig. 6: ein weiteres Ausführungsbeispiel eines erfindungsgemäßen Systems in einer schematischen Darstellung.
- Fig.7: ein weiteres Ausführungsbeispiel eines erfindungsgemäßen Systems in einer schematischen Darstellung.

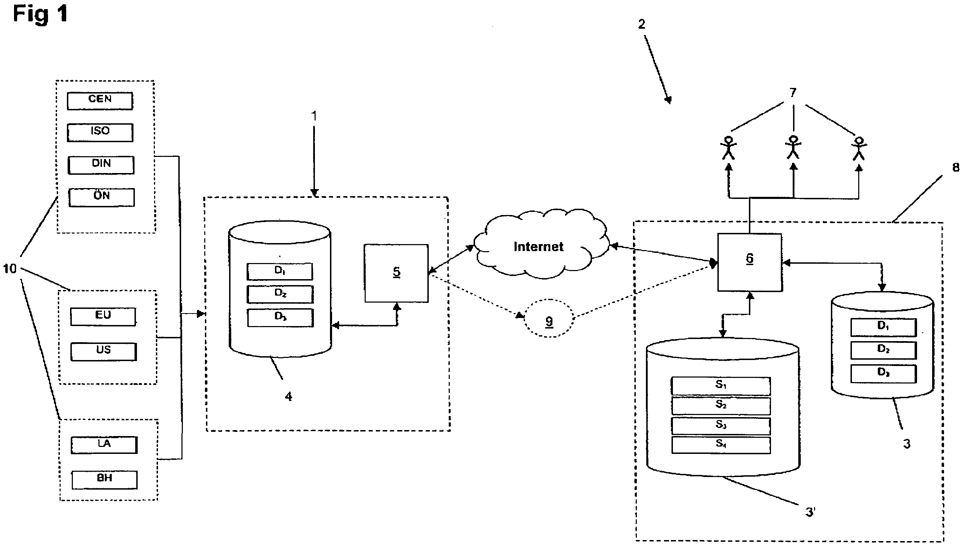

Aus dem in Fig.1 dargestellten Prinzip ist ersichtlich, dass das Dokument D₁, D₂, D₃ zwar letztendlich von der Zentralstelle 1 publiziert wird, die Erstellung desselben aber in Konsens zwischen verschiedensten betroffenen Fach- und Interessentenkreisen 10 erfolgt. Diese umfassen neben tatsächlichen Normungsorganisationen wie CEN, ISO, DIN oder ON weiters politische Amtsträger sowie externe Lösungsanbieter LA und Beuteilehersteller BH.

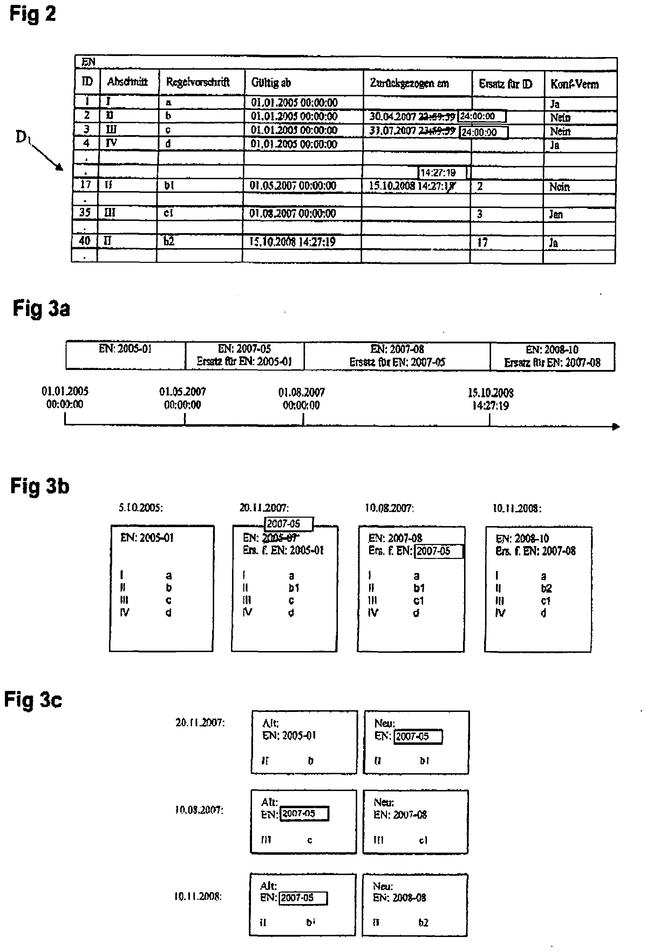

War es bisher üblich nach der Endbearbeitung das Ergebnis des Normungsverfahrens als "Norm" für den Interessentenkreis und die Öffentlichkeit in Papierform, in elektronischer Form (PDF) auf Datenbanken oder mobilen Datenträgern zugänglich zu machen, wird nunmehr das Ergebnis eines Normungsverfahrens in Form eines Dokumentes D₁, D₂, D₃ bzw. dessen Abschnitte in einer Datenbank 4, die mittels eines Datenservers 5 verwaltet wird, abgelegt. So muss nun bis zur Publikation einer geänderten Fassung eines Dokuments D₁, D₂, D₃ nicht wie bisher üblich die Endbearbeitung des kompletten Dokuments D₁, D₂, D₃ abgewartet werden, sondern es können die zu aktualisierenden Regelvorschriften b₁, b₂, c₁ vereinzelt umgehend veröffentlicht und dem Anwender 2 bereitgestellt werden. Die Versionierung und der Versionsverlauf ergeben sich automatisch aus der Datenbank 4 oder 3 (Fig.2, Fig 3).

Dazu steht der Datenserver 5 der Zentralstelle 1 über das Internet mit dem Datenserver 6 des Anwenders 2 in Verbindung. Es versteht sich von selbst, dass aus Gründen der Datensicherheit diese Verbindung zumindest einen passwortgeschützten Anmeldevorgang voraussetzen sollte und die Datenübertragung wenn möglich verschlüsselt erfolgen sollte. Alternativ wäre es aber auch durchwegs denkbar und möglich das neuerungsgemäße Verfahren nach der herkömmlichen Versandmethode 9, das heißt Versand der zu aktualisierenden Regelvorschriften b₁, b₂, c₁ in Papierform beziehungsweise mittels digitaler Datenträger, durchzuführen, der zu erwartende administrative Aufwand dürfte allerdings enorm sein.

Auf der Seite des Anwenders 2 werden beim dargestellten Ausführungsbeispiel mittels einer Einrichtung 8, die neben dem Datenserver 6 unter anderem eine technische Datenbank 3 für die Verwaltung der Dokumente D₁, D₂, D₃ sowie eine technische Datenbank 3' für die Verwaltung von anwenderspezifischen Sekundärdatensätzen S₁, S₂, S₃, S₄ aufweist, vorzugsweise die von der Zentralstelle 1 übermittelten aktualisierten Regelvorschriften b₁, b₂, c₁ in die Datenbank 3 eingepflegt. Ggf. werden in der Einrichtung 8 jedoch nur die für die Verlinkung zu den Detaildaten in einer externen Datenbank (z. B. 4) gepflegten Daten verwaltet.

Da mittlerweile die Übertragungszeiten im Internet bekanntermaßen kurz und die Rechnerleistungen hoch sind, kann bei konsequenter Umsetzung des neuerungsgemäßen Verfahrens die Verteilung aktualisierter Regelvorschhften b₁, b₂, c₁ beinahe in Echtzeit erfolgen, wodurch sich gegenüber dem Stand der Technik ein enormer Zeitgewinn und damit verbunden eine erhöhte Produktsicherheit sowohl für den Endverbraucher als auch für den Produzenten ergibt.

Zwischen den in der Datenbank 3 verwalteten Dokumenten D₁, D₂, D₃ beziehungsweise den darin implementierten Regelvorschriften a, b, b₁, b₂, c, c₁ und den in der Datenbank 3' verwalteten Sekundärdatensätzen S₁, S₂, S₃, S₄ werden anwenderseitig in weiterer Folge Beziehungen definiert und zwar derart, dass ein Zugriff auf ein Dokument D₁, D₂, D₃ wenigstens einen Sekundärdatensatz S₁, S₂, S₃, S₄ zurückgibt, der in der technischen Datenbank 3' mit auf Regelvorschriften a, b, b₁, b₂, c, c₁ bezogenen Querverweisen versehen ist, oder umgekehrt.

Über diese Beziehungen und Querverweise kann dann beispielsweise ermittelt werden, welche Personen 7 von Regelvarschriftenänderungen in Kenntnis gesetzt werden müssen. Bei entsprechender Datenpflege wäre es auch denkbar festzustellen, welche Person zwischenzeitlich die Rolle einer früher zuständigen Person übernommen hat und daher entsprechend von festgelegten Wichtigkeits- und Dringlichkeitsstufen beispielsweise per E-Mail oder SMS informiert werden muss.

Auch die Verwaltung und Aktualisierung von Bauteiledaten von Bauteileherstellem BH lässt sich mit dem Ziel einer automatischen Information der Anwender 2 beziehungsweise der zuständigen Personen 7 umsetzen. Funktionsweise: Die Bauteilehersteller verwalten deren Bauteile in einer Datenbank ähnlich der Datenbank 4 (Fig. 1). Im Falle von Produktwamungen, Produktrückrufen, Zurückziehungen oder Auflage von Ersatztypen werden diese aktuellen Informationen in der Datenbank vermerkt. Der Datenbankserver 6 ermittelt auf Basis der entsprechende Querverweise in der Datenbank 3', ob die in Projekten verplanten oder in Produkten enthaltenen Bauteile dazu führen, dass die gesetzlichen Anforderungen des Inverkehrbringensrechts nicht (mehr) eingehalten sind oder ob bestehenden Maschinen nicht (mehr) weiter betrieben werden dürfen.

Selbstverständlich wäre es auch denkbar, die Information Ober Regelvorschriftenänderungen von der Zentralstelle 1 direkt den handelnden Personen 7 bei den Anwendern 2 zukommen zu lassen. Dazu müsste die Zentralstelle Kenntnis von den Sekundärdatensätzen S₁, S₂, S₃, S₄ und den Beziehungen zwischen den Sekundärdatensätzen S₁, S₂, S₃, S₄ und den Regelvorschriften a, b, b₁, b₂, c, c₁ des jeweiligen Anwenders 2 haben.

Die Dokumente D_{1,} D₂, D₃ müssen nicht unbedingt auf der Datenbank 3 physikalisch vorhanden sein. Sie können auch auf irgendeiner anderen Datenbank gespeichert werden (z. B. Datenbank 4). In diesem Fall werden die Daten entsprechend der in der Datenbank 3' enthaltenen Querverweise bei Bedarf von der externen Datenbank "geholt" (z. B. über ein WEB-Service).

Fig. 2 zeigt beispielhaft eine Möglichkeit einer strukturierten Ablage eines Dokuments D₁ in der Datenbank der Zentralstelle 1 oder des Anwenders 2. Beim gezeigten Ausführungsbeispiel stellt das Dokument D1 eine Norm EN dar. Dabei wird tabellarisch festgehalten welcher Abschnitt _{I, II, III, IV} welche Regelvorschrift a, b, b₁, b₂, c, c₁ umfasst. Weiters ist unter anderem das Datum, ab dem die jeweilige Regelvorschrift a, b, b₁, b₂, c, c₁ gültig ist, beziehungsweise das Datum, mit dem die jeweilige Regelvorschrift a, b, b₁, b₂, c, c₁ als zurückgezogen gilt, eingepflegt. Weitere Parameter können beispielsweise Ersatzbestimmungen, Konformitätsannahmen, Statusinformationen (Entwurf, gültige Regelvor5chrift}, Wichtigkeits- und Dringlichkeitsparameter oder Verbindungen zu Unfallstatistiken sein.

Fig. 3 a zeigt beispielhaft den zeitlichen Verlauf der Aktualisierung der Norm EN (z. B. Dokument D₁) in der jeweiligen Fassung, während Fig. 3b wiedergibt, zu welchem Zeitpunkt welche Fassung der Regelvorschriften a, b, b₁, b₂, c, c₁ gerade Gültigkeit besitzt.

Da das Gültigkeitsdatum oder/und das Datum der Beeindigung der Konfarmitätsvermutungswirkung, mit dem die jeweiligen Regelvorschriften a,b,b₁,b₂,c,c₁ in Kraft treten, schon im Vorhinein feststeht, ist bei einer Verteilung der Regelvorschriften a,b,b₁,b₂,c,c₁ nach dem erfindungsgemäßen Verfahren eine vorausblickende Information der Anwender 2, ob geplante Anwendungen von Abschnitten _{I,II,III,IV} von Normen EN zum vorgesehenen Zeitpunkt des Inverkehrbringens auch aktuell sein werden, möglich. So kann vermieden werden, dass ausgelieferte Produkte nicht mehr dem Stand der Technik bzw. den gesetzlichen Anforderungen des Inverkehrbringensrechts entsprechen, weil sich im Laufe der Projektlaufzeit eine der angewandten Regelvorschriften geändert hat. Ferner ist dadurch automatisiert - ermittelbar, welche Auswirkungen eine Terminverschiebung des Zeitpunkts des Inverkehrbringens aus normativer Sicht haben kann.

Um den anwendenden Personen 7 das Erkennen der Auswirkungen von Änderungen der Regelvorschriften a, b, b₁, b₂, c, c₁ zu vereinfachen, ist es für die zuerst wichtig zu wissen, welche Regelvorschriften a, b, b₁, b₂, c, c₁ sich in der aktualisierten Fassung der Norm EN im Detail geändert haben beziehungsweise welche Regelvorschrift a, b, c, d durch welche aktualisierte Regelvorschrift b₁, b₂, c₁ wann ersetzt wurde. Eine derartige Übersicht stellt das in Fig. 3c dargestellte Abfrageergebnis dar. Eine Gegenüberstellung der Ausgabestände mit entsprechender Kennzeichnung erleichtert das rasche Erfassen der Änderungen.

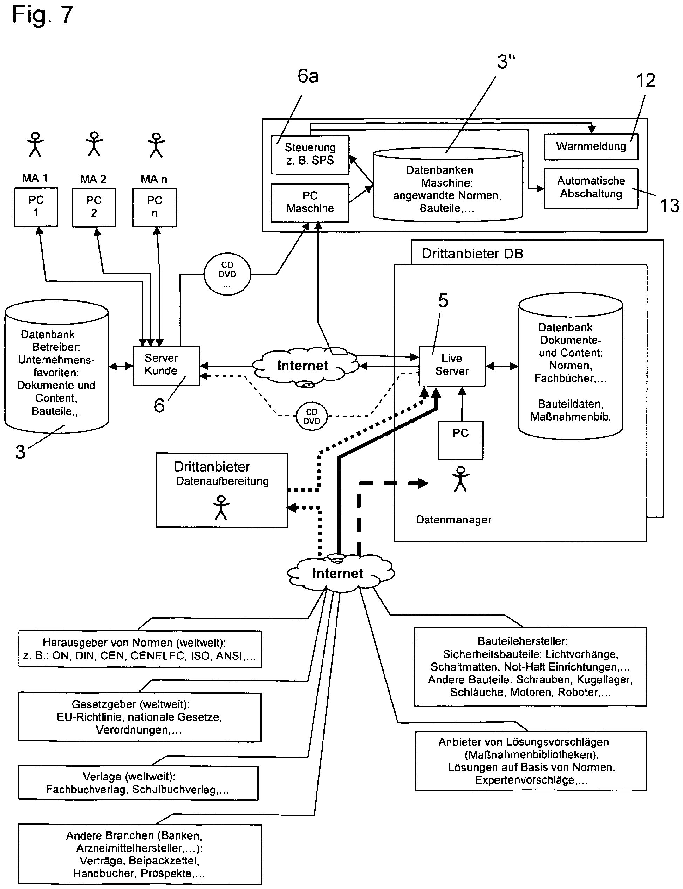

Die Fig. 4 zeigt schematisch eine Datenbank 3 die beim Kunden selbst bzw. von einem Datenbankserver 6 wie er in der Fig. 6 oder 7 dargestellt ist, verwaltet wird. Derselbe Datenbankserver oder ein weiterer Datenbankserver kann die erfindungsgemäß vorgesehene Sekundärdatenbank 3' verwalten.

In der Datenbank 3 sind beispielsweise Normen in Form von Dokumenten D₁, D₂, D₃,... abgelegt und zwar nicht nur die gesamten Normen beispielsweise als PDF-Dokument, sondern einzelnen Regelvorschriften der jeweiligen Norm. Dabei ist es erfindungsgemäß ausreichend, wenn in der Datenbank 3 nicht die gesamte Norm sondern nur die jener Regelvorschriften abgelegt ist, die vom Anwender benötigt werden oder nur die Links die nötig sind, um die Daten bei Bedarf zu übertragen Die benötigten Regelvorschriften (content used) sind in der anwenderseitigen Sekundärdatenbank abgelegt und zwar in Sekundärdatensätzen S₁, S₂, S₃, S₄. Allein diese Information reicht aus, die Normendatenbank 3 effizient zu verwalten, denn bei Änderungen braucht nicht das gesamte Normendokument D₁ aktualisiert werden, sondern nur die einzelnen Bestimmungen die relevant sind, beispielsweise die Bestimmungen a, b, c₁, a', a", b₁", Der Aktuaüsierungsprozess der Datenbank 3 kann entweder in regelmäßigen Zeitabständen aktualisiert werden, indem aus einer externen Bereitstellungsdatenbank 4 beispielsweise Ober das Internet die aktualisierten Regelvorschriften (und nur jene die benötigt werden) abgeholt werden oder auf einen manuellen Aktualisierungsbefehl hin.

Bei all diesen Aktualitätschecks werden die kundenspezifischen Daten ausschließlich in einer Datenbank 3 beim Kunden verwaltet. Die externe Datenbank 4 dient lediglich als Datenquelle für die aktuellen Dokumente. Nicht ein beispielsweise bei der externen Datenbank 4 vorhandener Lifeserver ermittelt welche Aktionen ausgeführt werden sollen, sondern ausschließlich der Datenbankserver 6 beim Kunden, gegebenenfalls in Zusammenarbeit mit weiteren Rechnern, die mit den Datenbankservern in Verbindung stehen.

Gemäß einer bevorzugten Ausführungsform kann aber erfindungsgemäß nicht nur der Aktualisierungsprozess vereinfacht werden, vielmehr können auch Automatismen implementiert werden, die beim Kunden bei Änderung einer relevanten Regelvorschrift eines Dokumentes, beispielsweise einer Norm, automatisch zu bestimmten Folgen führt.

Dazu weist die Sekundärdatenbank 3' (schematisch in der Spalte "To-do" dargestellt) Querverweise auf, die von den einzelnen aktualisierten Regelvorschriften abhängen. Diese Quewerweise sind beispielsweise mit f₁ (a, a', b₁"), f₂ (a") oder f₃ (b, c₁) bezeichnet. Diese Querverweise können auch noch den Adressaten umfassen, beispielsweise eine bestimmte Person (Mr. X), eine bestimmte optische oder akustische Wamvorrichtung (warn 1) oder eine bestimmte Maschinensteuerung (maschine 2).

Wenn sich nun eine bestimmte Regelvorschrift, beispielsweise a' ändert, dann erstellt der in Fig. 5 dargestellte, lokale Datenbankserver 6 gegebenenfalls zusammen mit einem weiteren Rechner (wie die SPS 6a der Fig. 7) sicher, dass bestimmte Handlungen automatisiert vorgenommen werden. Bei Änderung von a' ist der Sekundärdatensatz S₂ und S₃ völlig unberührt, da in diesen die Regelvorschrift a' nicht vorkommt. Lediglich der Querverweis f₁ (a, a', b₁") hängt von a' ab. Er führt dazu, dass ein bestimmter Adressat beispielsweise mittels einer E-Mail oder SMS-Einheit 11 (siehe Fig. 5) informiert wird.

Ändert sich beispielsweise die Regelvorschrift a", so hat dies lediglich Auswirkungen auf den Querverweis f₂ (a") und es erfolgt über die optische und/oder akustische Wamanzeigevorrichtung 12 eine Warnung.

Bei Änderung von beispielsweise des Nörmenabschnitts c₁ ändert sich lediglich der Querverweis f₃ (b, c₁) weil die anderen Querverweise von diesem Parameter nicht abhängen. Es erfolgt hier dann über die Abschalteinrichtung 13 einer Maschine beispielsweise eine Abschaltung dieser Maschine.

Insgesamt müssen daher gemäß dem erfindungsgemäßen System einerseits bei einer externen Datenquelle immer nur jene Regelvorschriften aktualisiert werden, die der Anwender direkt benötigt. Dazu dienen die Beziehungen zwischen den Sekundärdatensätzen S₁ und der lokalen (Normen)Datenbank Dᵢ bzw. den darin abgelegten Datensätzen. Andererseits kann das erfindungsgemäße System bei Änderung dieser speziellen, relevanten Regelvorschriften auch gleich automatisiert Handlungen vornehmen, um den Benutzer zu informieren, oder überhaupt Steuerungsabläufe zu verändern, bis hin zur Abschaltung einer Maschine, wenn beispielsweise ein dort verwendeter Bauteil nicht mehr einer aktualisierten Norm beziehungsweise deren Regelvorschrift entspricht oder vom Bauteilehersteller BH mit einem entsprechenden Statusvermerk belegt wurde.

Die Ausführungsbeispiele gemäß den Figuren 6 und 7 sind im Wesentlichen nach dem Funktionsprinzip der Figuren 4 und 5 aufgebaut, stellen jedoch noch weitere Details dar.

Bei dem in Fig. 6 dargestellten Ausführungsbeispiel wäre noch folgendes zu ergänzen:

Anhand vorliegender Projekt- oder Vorlagedaten wird ermittelt;
■ Welche Projekte in welcher Weise von Normenänderungen betroffen sind.
■ Welche sicherheitstechnischen Lösungen in welchen Projekten von Normenänderungen betroffen sind und daher hinterfragt werden müssen.
■ Welche Personen für die Validierung von Maßnahmen auf Basis einer bestimmten Norm zuständig sind und daher informiert werden müssen (auf Basis der im Unternehmen und in den Projekten definierten Rollen).
■ Ob Maßnahmen erneut validiert werden müssen, weil während dem Projektverlauf bereits abgeschlossene Lösungen von Normenänderungen betroffen sind.
■ Ob abgeschlossene Projekte von Normenfehlern betroffen sind, die zu Produkthaftungrisiken führen können (Stichwort: "Produktbeobachtungspflicht")
■ Ob die aktuell angewandten Prüfmethoden, Prüflisten oder Vorlagen noch dem Stand der Normung entsprechen.

Das erfindungsgemäße System führt dazu beim Aktualisierungslauf entsprechende Auswertungen durch und erstellt Protokolllisten und stößt darüber hinaus automatisch Informationsmechanismen an, die die betroffenen Personen informieren (z.B. per E-Mail oder SMS).

Zur Fig. 7 wäre noch zu ergänzen:

Darüber hinaus können sich Produkte mit entsprechenden integrierten Systemen (Steuerungen) selbst auf bestimmte Fehler oder Mängel überprüfen und
■ automatisiert optische und/oder akustische Wammeldungen ausgeben oder
■ die Maschine abschalten.

Funktionsweise: Die vom Hersteller getroffenen sicherheitstechnischen Lösungen werden in eine eigene Datenbank in der Maschinensteuerung übertragen. Diese Datenbank gleicht sich über die Datenbank am Live Server ab. Sollte eine kritische Änderung eines Normenabschnitts ermittelt werden, wird in der Datenbank ein Flag gesetzt. Dieses Flag wird von der Maschinensteuerung (z.B. SPS) zyklisch abgeprüft. Der Wert führt zur Warnung, Abschaltung oder Warnmeldung per E-Mail oder SMS an die entsprechend definierten Personen (Instandhaltung, Betriebsleitung, Bedienperson,...) oder/und zur Abschaltung der Maschine (13).

Es ist auch möglich, neben einer Normendatenbank eine sog. Bauteilebibliothek zu verwalten (Bauteile werden dort wie Normen behandelt). Wenn ein Hersteller für ein bestimmtes Bauteil in einer externen Datenbank am Live Server ein Flag setzt (z.B. "Rückruf"), prüft das System, in welchen Projekten (bzw. Sekundärdatensätzen) diese Bauteile verwendet wurden und informiert die betroffenen Personen oder deren Nachfolger per E-Mail oder SMS darüber oder/und schaltet eine Maschine ab oder führt zu einer Anzeige (z. B. Leuchte oder Fehlermeldung).

Auf der Seite des Betreibers der Maschine könnten Maschinensteuerungen über eine definierte Schnittstelle auf die Datenbank zugreifen und automatisiert optische oder/und akustische Wammeldungen ausgeben oder die Maschine abschalten, wenn das betroffene Bauteil in der Maschine verbaut ist.

Wenn auch die Erfindung anhand der beschriebenen Ausführungsbeispiele näher definiert wurde, versteht es sich von selbst, dass die Erfindung nicht auf diese Ausführungsbeispiele beschränkt ist. Vielmehr sind Maßnahmen, die dazu dienen den Erfindungsgedanken einer möglichst raschen und effizienten Verteilung von aktualisierten Regelvorschriften zu unterstützen durchaus erwünscht und willkommen.

## Patentansprüche

1. Verfahren zur Bereitstellung und Aktualisierung eines Dokuments (D₁, D₂, D₃) mit wenigstens einer, insbesondere mehreren, sich auf einen zu regelnden Gegenstand beziehenden Regelvorschrift (a, b, c, d) bei dem das Dokument (D₁, D₂, D₃) von mindestens einer Zentralstelle (1) publiziert, einem oder mehreren Anwendern (2) bereitgestellt und in weiterer Folge anwenderseitig insbesondere in einer Datenbank (3) verwaltet wird, **dadurch gekennzeichnet, dass** das Dokument (D₁, D₂, D₃) - vorzugsweise anwenderseitig - in einer lokalen Datenbank (3) verwaltet wird und Beziehungen zwischen dem Dokument (D₁, D₂, D₃) und/oder einzelnen Regelvorschriften (a, b, b₁, b₂, c, c₁) des Dokuments (D₁, D₂, D₃) mit wenigstens einem, vorzugsweise mehreren, auf den zu regelnden Gegenstand bezogenen anwenderspezifischen Sekundärdatensatz (S₁, S₂, S₃, S₄) definiert werden.

2. Verfahren nach Anspruch 1, **dadurch gekennzeichnet, dass** für eine Aktualisierung des Dokuments (D₁, D₂, D₃) im Wesentlichen ausschließlich die zu aktualisierende Regelvorschrift (b₁, b₂, c₁) von der Zentralstelle (1) publiziert und dem Anwender (2) bereitgestellt wird.

3. Verfahren nach Anspruch 1 oder 2, **dadurch gekennzeichnet, dass** das Dokument (D₁, D₂, D₃) eine Norm (EN) darstellt und der Gegenstand, auf den sich wenigstens eine Regelvorschrift (a, b, c, d) bezieht, ein Produkt, ein Prozess, ein Verfahren oder ein System ist.

4. Verfahren nach einem der Ansprüche 1 bis 3, **dadurch gekennzeichnet, dass** die Publikation der zu aktualisierenden Regelvorschrift (b₁, b₂, c₁) auf einem Datenbankserver (5), mit dem der Anwender (2) vorzugsweise online verbunden bzw. verbindbar ist, erfolgt.

5. Verfahren nach einem der Ansprüche 1 bis 4, **dadurch gekennzeichnet, dass** die Zentralstelle (1) den Anwender (2) vor, bei oder nach erfolgter Publikation der aktualisierten Regelvorschrift (b₁, b₂, c₁) über deren Bereitstellung informiert.

6. Verfahren nach Anspruch 5, **dadurch gekennzeichnet, dass** die Aktualisierung mittels autorisierter, vorzugsweise verschlüsselter, Datenübertragung erfolgt.

7. Verfahren nach einem der Ansprüche 1 bis 6, **dadurch gekennzeichnet, dass** die anwenderspezifischen Sekundärdatensätze (S₁, S₂, S₃, S₄) zuständigkeitsbezogene Daten, insbesondere Informationen über Aufgaben und die jeweilig verantwortlichen Personen (7, '7', 7") umfassen.

8. Verfahren nach einem der Ansprüche 1 bis 7, **dadurch gekennzeichnet, dass** die anwenderspezifischen Sekundärdatensätze (S₁, S₂, S₃, S₄) maschinenbezogene oder bauteilbezogene Daten umfassen.

9. Verfahren nach einem der Ansprüche 1 bis 8, **dadurch gekennzeichnet, dass** die anwenderspezfischen Sekundärdatensätze (S₁, S₂, S₃, S₄) von den mit ihnen in Beziehung stehenden einzelnen Regelvorschriften (a, a', a", b, b₁", c₁) abhängige Querverweise (f₁, f₂, f₃) aufweisen, und bei Änderung der einzelnen Regelvorschriften (a, a', a", b, b₁", c₁) in Abhängigkeit von diesen Querverweisen (f₁, f₂, f₃) automatisch Informationen an bestimmte Adressaten ausgeben, optische und/oder akustische Warnmeldungen abgegeben und/oder Änderungen von Maschinensteuerungen vorgenommen werden (Fig. 5, Fig. 6).

10. Verfahren nach einem der Ansprüche 1 bis 9, **dadurch gekennzeichnet, dass** die Zentralstelle (1) die Anwender (2) über die Bereitstellung aktualisierter Regelvorschriften (b₁, b₂, c₁) in Abhängigkeit bestehender Beziehungen zwischen dem Dokument (D₁, D₂, D₃) und/oder einzelnen Regelvorschriften (a, b, c, d) des Dokuments (D₁, D₂, D₃) mit wenigstens einem anwenderspezifischen Sekundärdatensatz (S₁, S₂, S₃, S₄) informiert.

11. Verfahren nach einem der Ansprüche 1 bis 10, **dadurch gekennzeichnet, dass** das Dokument (D₁, D₂, D₃) in Abschnitte (I, II, III; IV) gegliedert wird und jedem Abschnitt (I, II, III, IV) zumindest eine, vorzugsweise mehrere, Regelvorschriften (a, b, c, d) zugeordnet wird bzw. zuordenbar ist.

12. Verfahren nach Anspruch 11, **dadurch gekennzeichnet, dass** die zu aktualisierenden Regelvorschriften (b₁, b₂, c₁) abschnittsselektiert publiziert und dem Anwender (2) bereitgestellt werden.

13. Verfahren nach Anspruch 12, **dadurch gekennzeichnet, dass** die Selektierung der zu aktualisierenden Abschnitte (I, II) in Abhängigkeit bestehender Beziehungen zwischen dem Dokument (D_{1,} D₂, D₃) und/oder einzelnen Regelvorschriften (a, b, c, d) des Dokuments (D₁, D₂, D₃) mit wenigstens einem auf den zu regelnden Gegenstand bezogenen anwenderspezifischen Sekundärdatensatz (S₁, S₂, S₃, S₄) erfolgt.

14. System zur Durchführung eines Verfahrens nach einem der Ansprüche 1 bis 13, mit einem - vorzugsweise anwenderseitig - aufgestellten Datenbankserver für einen Zugriff auf eine Datenbank (3), die elektronisch gespeicherte Dokumente (D₁, D₂, D₃) mit sich auf einen zu regelnden Gegenstand beziehende, vorzugsweise in Abschnitte (I, II) gegliederte Regelvorschriften (a, b, b₁, b₂, c, c₁) umfasst, **dadurch gekennzeichnet, dass** eine - vorzugsweise anwenderseitig angeordneten - Sekundärdatenbank (3') vorgesehen ist, die auf den zu regelnden Gegenstand bezogene Sekundärdatensätze enthält; wobei diese anwenderspezifische Sekundärdatensätze (S₁, S₂, S₃, S₄) von den mit ihnen in Beziehung stehenden einzelnen Regelvorschriften (a, a', b, b₁", c₁) abhängige Querverweise (f₁, f₂, f₃) aufweisen, und der Datenbankserver (6) und/oder ein damit in Verbindung stehender Rechner in Abhängigkeit von diesen Querverweisen (f₁, f₂, f₃) automatisch Informationen an bestimmte Adressaten ausgibt, optische und/oder akustische Warnmeldungen abgibt und/oder Änderungen von Maschinensteuerungen vornimmt (Fig. 5, Fig. 6, Fig. 7).

15. System zur Durchführung eines Verfahrens nach einem der Ansprüche 1 bis 13, mit einer Einrichtung (8) für einen Zugriff auf eine und einer Verwaltung von einer technischen Datenbank (3), insbesondere Dokumentendatenbank, vorzugsweise Normendatenbank, die elektronisch gespeicherte Dokumente (D₁, D₂, D₃) mit sich auf einen zu regelnden Gegenstand beziehende, vorzugsweise in Abschnitte (1, 11) gegliederte Regelvorschriften (a, b, b₁, b₂, c, c₁) umfasst, **dadurch gekennzeichnet, dass** die Einrichtung (8) einen Datenbankserver (6) aufweist und die technische Datenbank (3) strukturiert ist, um Beziehungen zwischen Regelvorschriften (a, b, b₁, b₂, c, c₁) und auf den zu regelnden Gegenstand bezogenen Sekundärdatensätze (S_{1,} S₂, S₃, S₄) zu umfassen, so dass ein Zugriff auf ein Dokument (D₁, D₂, D₃) wenigstens einen Sekundärdatensatz (S₁, S₂, S₃, S₄) zurückgibt, der in der technischen Datenbank (3') mit auf Regelvorschriften (a, b, b₁, b₂, c, c₁) bezogenen Querverweise versehen ist.

16. Verfahren zur Überprüfung des Vorliegens einer aufrechten Konformitätsvermutung für einen genormten Gegenstand bezogen auf wenigstens eine Norm (EN) oder einen Normenabschnitt, insbesondere zum Zeitpunkt seiner Inverkehrbringung, **gekennzeichnet durch** die Verwendung einer technischen Datenbank (3), die harmonisierte Normen (EN) und/oder Verknüpfungen zu harmonisierten Normen auf einer gesonderten Datenbank (4) zumindest in der aktuell gültigen Fassung sowie sich auf den genormten Gegenstand beziehende Sekundärdatensätze (S₁, S₂, S₃, S₄) elektronisch gespeichert umfasst und strukturiert ist, um Beziehungen zwischen den Regeivorschriften (a, b, b₁, b₂, c, c₁) der Normen (EN) und den Sekundärdatensätzen (S₁, S₂, S₃, S₄) zu umfassen, wobei die Überprüfung der-GültigKeit der Konformitätsvermutung auf Basis von Querverweisen, mit denen die Sekundärdatensätze (S₁, S₂, S₃, S₄) in der technischen Datenbank (3') versehen bzw. mit der(den) anzuwendenden Norm(en)) (EN) verknüpft sind, erfolgt.

17. Verfahren zur Durchführung einer Konformitätsbewertung für einen genormten Gegenstand unter Anwendung des Verfahrens nach Anspruch 14.
